(19) Europäisches Patentamt
European Patent Office
Office européen des brevets

(11) **EP 4 737 938 A1**

(12) **EUROPEAN PATENT APPLICATION**

(43) Date of publication:
06.05.2026 Bulletin 2026/19

(21) Application number: 25212789.9

(22) Date of filing: 31.10.2025

(51) International Patent Classification (IPC):
$G01S\ 7/288^{(2006.01)}$    $G01S\ 7/41^{(2006.01)}$
$G01S\ 13/04^{(2006.01)}$    $G01S\ 13/10^{(2006.01)}$
$G01S\ 13/522^{(2006.01)}$    $G01S\ 13/524^{(2006.01)}$
$G01S\ 13/56^{(2006.01)}$    $G01S\ 13/933^{(2020.01)}$

(52) Cooperative Patent Classification (CPC):
**G01S 7/417; G01S 13/04; G01S 13/10;**
**G01S 13/522;** G01S 7/2886; G01S 7/415;
G01S 13/5246; G01S 13/56

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **31.10.2024 IL 31673124**

(71) Applicant: **Elta Systems Ltd.**
**Ashdod 7710201 (IL)**

(72) Inventor: **AMARA, Arie**
**Ako (IL)**

(74) Representative: **Mewburn Ellis LLP**
**Aurora Building**
**Counterslip**
**Bristol BS1 6BX (GB)**

(54) **RADAR DETECTION AND CLASSIFICATION USING AN AUTO REGRESSIVE SPECTRAL ESTIMATOR WITH MACHINE LEARNING**

(57) A processing circuitry-based method of detecting radar targets, the method comprising a) receiving data derivative of a series of radar pulse measurements; b) generating an autoregressive (AR) spectral estimation, of a given order, from the received data, thereby resulting in two or more complex coefficients of an estimated AR model; c) utilizing data derivative of the two or more complex coefficients as input to one or more trained machine learning models, thereby resulting in, at least a. an indication of presence or absence of a target, and b. responsive to presence of the target: a distance, an energy, and a velocity of the target, the one or more models having been trained to receive data derivative of complex coefficients and output data informative of target depth, energy, and velocity.

Fig. 1

Detection System (processing circuitry) 100
- Autoregressive Estimation Unit 115
- ML model(s) 135
- Target Detection/Identification Unit 125
- Signal processing Unit 145
- CFAR Unit 140
- Processor 105
- Memory 110

Radar Unit 150

## Description

## TECHNICAL FIELD

The presently disclosed subject matter relates to radar detection, and in particular to machine learning/artificial intelligence-based enhancements to detection and identification of radar targets

## BACKGROUND

Problems of detection in radar systems have been recognized in the conventional art and various techniques have been developed to provide solutions.

## GENERAL DESCRIPTION

According to one aspect of the presently disclosed subject matter there is provided a method of detecting radar targets, the method comprising:

a) receiving data derivative of a series of radar pulse measurements;

b) generating an autoregressive (AR) spectral estimation, of a given order, from the received data, thereby resulting in two or more complex coefficients of an estimated AR model;

c) utilizing data derivative of the two or more complex coefficients as input to one or more trained machine learning models, thereby resulting in, at least:

a. an indication of presence or absence of a target, and
b. responsive to presence of the target:
a distance, an energy, and a velocity of the target,

the one or more models having been trained to receive data derivative of complex coefficients and output data informative of target depth, energy, and velocity.

In addition to the above features, the system according to this aspect of the presently disclosed subject matter can comprise one or more of features (i) to (x) listed below, in any desired combination or permutation which is technically possible:

(i) the utilizing the data as input to the trained machine learning models further results in, responsive to presence of the target:
data indicative of a target identification.

(ii) the data derivative of the series of radar pulse measurements comprises in-phase and quadrature (I/Q) data.

(iii) the given order is four.

(iv) the data derivative of the complex coefficients is data informative of pole coordinates.

(v) the pole coordinates are based on roots of:

$$1 - \sum_{k=1}^{p} a^k z^k$$

where p is the given order of the estimated model, $a^k$ are the complex coefficients of the estimated model, and $z^k$ are the radar pulse measurements.

(vi) the data derivative of the complex coefficients is polar map image data based on pole coordinates, the pole coordinates being based on the complex coefficients of the estimated model.

(vii) the performing complex autoregressive spectral estimation comprises at least one of:

a) least squares estimation,
b) Yule-Walker equation computation,
c) Levinson-Durbin algorithm,
d) Burg's method,
e) maximum likelihood estimation,
f) parametric estimation with Kalman filtering, and
g) predictive error minimization.

(viii) the method additionally comprising, prior to step b):

evaluating presence of a target, based on applying signal processing techniques to an AR spectral estimation of order two of data derivative of the series of radar pulses;

and wherein the generating is responsive to successful evaluating of the presence of the target.

(ix) the method additionally comprising, subsequent to c):
verifying the distance, energy, and velocity of the target, based on at least one of:

i. utilizing a constant false alarm rate (CFAR) method in conjunction with a range-Doppler map based on data derivative of the series of radar pulses; and
ii. applying signal processing techniques to an AR spectral estimation of order two of data derivative of the series of radar pulses.

(x) at least one of the one or more machine learning models was trained by a method comprising:

a. receiving data that is derivative of AR spectral estimation coefficients associated with a given radar target;

b. receiving ground truth data associated with the given radar target, the ground truth data comprising at least one of:

    i. a distance,
    ii. an energy,
    iii. a velocity, and
    iv. an identification
    associated with the given radar target;

c. training the machine learning model based on the received data derivative of the AR spectral estimation coefficients and the received ground truth data.

According to another aspect of the presently disclosed subject matter there is provided a system of detecting radar targets, the system comprising a processing circuitry configured to:

a) receive data derivative of a series of radar pulse measurements;

b) generate an autoregressive (AR) spectral estimation, of a given order, from the received data, thereby resulting in two or more complex coefficients of an estimated AR model;

c) utilize data derivative of the two or more complex coefficients as input to one or more trained machine learning models, thereby resulting in, at least:

a. an indication of presence or absence of a target, and
b. responsive to presence of the target:
a distance, an energy, and a velocity of the target,

the one or more models having been trained to receive data derivative of complex coefficients and output data informative of target depth, energy, and velocity.

This aspect of the disclosed subject matter can further optionally comprise one or more of features (i) to (x) listed above with respect to the method, mutatis mutandis, in any desired combination or permutation which is technically possible.

According to another aspect of the presently disclosed subject matter there is provided a computer program product comprising a computer readable non-transitory storage medium containing program instructions, which program instructions when read by a processor, cause the processing circuitry to perform a method of detecting radar targets, the method comprising:

a) receiving data derivative of a series of radar pulse measurements;

b) generating an autoregressive (AR) spectral estimation, of a given order, from the received data, thereby resulting in two or more complex coefficients of an estimated AR model;

c) utilizing data derivative of the two or more complex coefficients as input to one or more trained machine learning models, thereby resulting in, at least:

a. an indication of presence or absence of a target, and
b. responsive to presence of the target:
a distance, an energy, and a velocity of the target,

the one or more models having been trained to receive data derivative of complex coefficients and output data informative of target depth, energy, and velocity.

This aspect of the disclosed subject matter can further optionally comprise one or more of features (i) to (x) listed above with respect to the method, mutatis mutandis, in any desired combination or permutation which is technically possible.

**BRIEF DESCRIPTION OF THE DRAWINGS**

In order to understand the invention and to see how it can be carried out in practice, embodiments will be described, by way of non-limiting examples, with reference to the accompanying drawings, in which:

**Fig. 1** is a logical block diagram of an example radar unit and system of target detection utilizing spectral autoregression, in accordance with some embodiments of the presently disclosed subject matter;

**Figs. 2A-2B** illustrate example polar maps of autoregressive estimations of radar data, in accordance with some embodiments of the presently disclosed subject matter;

**Fig. 3** is a flow diagram of an example method of determining radar target characteristics based on machine learning in conjunction with autoregressive spectral estimation, in accordance with some embodiments of the presently disclosed subject matter; and

**Fig. 4** is a flow diagram of an example method of training a machine learning model to classify autoregressive spectral estimation data to radar target characteristics based on, in accordance with some embodiments of the presently disclosed subject matter; and

**Fig. 5** is a flow diagram of an example method of determining radar target characteristics based on multiple methods, including autoregressive spectral estimation, in accordance with some embodiments of the presently disclosed subject matter.

## DETAILED DESCRIPTION

In the following detailed description, numerous specific details are set forth in order to provide a thorough understanding of the invention. However, it will be understood by those skilled in the art that the presently disclosed subject matter may be practiced without these specific details. In other instances, well-known methods, procedures, components and circuits have not been described in detail so as not to obscure the presently disclosed subject matter.

Unless specifically stated otherwise, as apparent from the following discussions, it is appreciated that throughout the specification discussions utilizing terms such as "processing", "computing", "comparing", "encrypting", "decrypting", "determining", "calculating", "receiving", "providing", "obtaining", "emulating" or the like, refer to the action(s) and/or process(es) of a computer that manipulate and/or transform data into other data, said data represented as physical, such as electronic, quantities and/or said data representing the physical objects. The term "computer" should be expansively construed to cover any kind of hardware-based electronic device with data processing capabilities including, by way of non-limiting example, the processor, mitigation unit, and inspection unit therein disclosed in the present application.

The terms "non-transitory memory" and "non-transitory storage medium" used herein should be expansively construed to cover any volatile or non-volatile computer memory suitable to the presently disclosed subject matter.

The operations in accordance with the teachings herein may be performed by a computer specially constructed for the desired purposes or by a general-purpose computer specially configured for the desired purpose by a computer program stored in a non-transitory computer-readable storage medium.

Embodiments of the presently disclosed subject matter are not described with reference to any particular programming language. It will be appreciated that a variety of programming languages may be used to implement the teachings of the presently disclosed subject matter as described herein.

Some prior art systems seek to enhance radar target detection using machine learning. Some such systems have attempted to utilize range-doppler (RD) maps. An RD map typically has an x axis based on target distance and a y axis based on doppler shift (e.g. in meters/s). Dots in the RD map can have a color indicative of signal strength.

Some embodiments of the presently disclosed subject matter utilize a different approach to machine learning enhancement of radar detection, and utilize autoregressive spectral estimation in conjunction with polar maps (i.e. a form of dimensional reduction), as will be described in detail below.

Utilizing autoregressive spectral estimation and the techniques disclosed here in can result in improved detection and target identification. Advantages of these methods can include the following:

- Absence of Fourier transfer requirement enables higher frequency resolution and separation
- Elimination of requirement to perform Moving Target Indicator using HighPass Filtering (MTI-HPF) for weak targets
- Utilization of large dynamic range, so as detect strong and weak targets simultaneously
- Improved detection for low snr and slow velocity targets in the clutter
- Effectiveness with shorter pulse series (due to small order of autoregressive regression)
- Avoidance of false detections from sidelobes
- Better identification in situations of high signal-to-clutter
- Better reproducibility (on site training) due to universal calibration for normalized polar representation

This technique can be especially effective for detection of small/(low SNR) and slow targets (i.e drones and unmanned aerial vehicles (UAVS) and for classification of jets / propellers and birds to prevent false alarms.

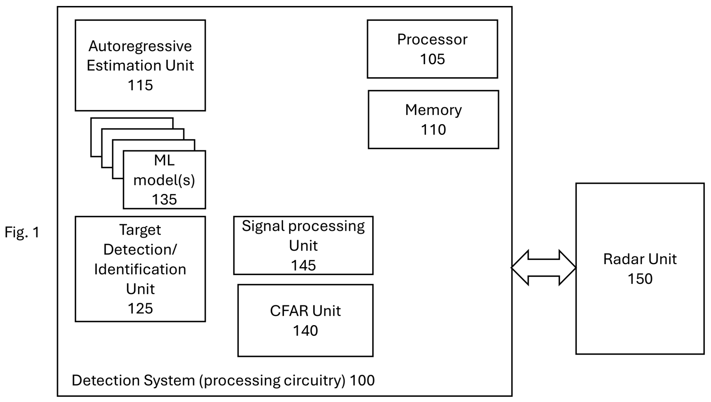

**Fig. 1** is a logical block diagram of an example radar unit and system of target detection utilizing spectral autoregression, in accordance with some embodiments of the presently disclosed subject matter.

Radar unit **150** can be a suitable type of radar equipment. Radar unit **150** can transmit radar pulses toward targets (e.g. within a particular range window) and can generate data (e.g. in-phase and quadrature (I/Q) data) based on detected return radar pulses.

Radar unit **150** can be operably connected to detection system (processing circuitry) **100** - for example, via a suitable network connection. Alternatively, radar unit **150** can be physically collocated with detection system (processing circuitry) **100.**
Detection system (processing circuitry) **100** can include processor **105** and memory **110.**

Processor **105** can be a suitable hardware-based electronic device with data processing capabilities, such as, for example, a general purpose processor, digital signal processor (DSP), a specialized Application Specific Integrated Circuit (ASIC), one or more cores in a multicore processor, etc. Processor **105** can also consist, for example, of multiple processors, multiple ASICs, virtual processors, combinations thereof etc.

Memory **110** can be, for example, a suitable kind of volatile and/or non-volatile storage, and can include, for example, a single physical memory component or a plurality of physical memory components. Memory **110** can also include virtual memory. Memory **110** can be configured to, for example, store various data used in computation.

Detection system (processing circuitry) **100** can be configured to execute several functional modules in accordance with computer-readable instructions implemented on a non-transitory computer-readable storage medium. Such functional modules are referred to hereinafter as comprised in the processing circuitry. These modules can include, for example: autoregressive estimation unit **115,** target detection/identification unit **125,** machine learning model(s) **135,** constant false alarm rate (CFAR) Unit **140,** and signal processing unit **145.**

Target detection/identification unit **125** can be a hardware or software module which processes radar data (e.g. I/Q data) and determines whether a target is present. Target detection/identification unit **125** can further determine the distance, velocity, and energy of one or more detected targets. In some embodiments, target detection/identification unit **125** can further determine the type of target eg. airplane, helicopter, missile, birds etc., or even a particular type of airplane etc.

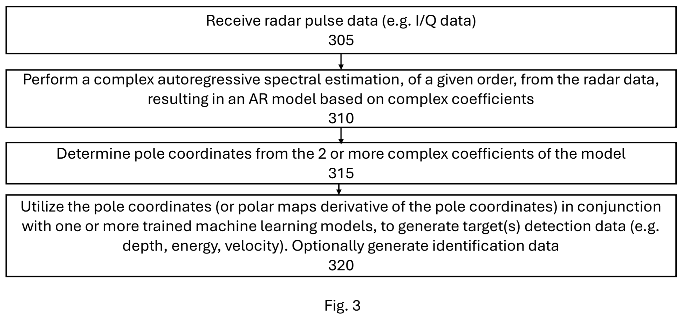

Target detection/identification unit **125** can perform detection/identification using a method such as the one described in **Fig. 3** below.

Autoregressive estimation unit **115** can receive radar data (e.g. I/Q data), and estimate an autoregressive (AR) model based on the data.

By way of non-limiting example, autoregressive estimation unit **115** can estimate an AR model of a given order (e.g. AR(4)) by determining complex-domain AR coefficients $a_k$ such that:

$$x(t) = - (t) = \sum_{k=1}^{p} a_k x (t{-}k) + e(t)$$

where:

x(t) is the signal at time t
p is the order of the estimation (e.g. 4) and
e(t) is white noise.

In some embodiments, autoregressive estimation unit **115** can further calculate poles of the estimated AR model. For example: autoregressive estimation unit **115** can calculate the poles by determining solutions of the characteristic equation:

$$1 - \sum_{k=1}^{p} a^k z^k = 0$$

ML model(s) **135** can one or more machine learning models that have been trained to determine characteristics of targets from AR modeling data.

For example: ML model(s) **135** can be a classification model which receives vector data indicative of poles of an AR(4) estimation, and generates an indication of whether or how many targets are present. In some examples, ML model(s) **135** can generate indications of a single target with multiple velocities (e.g. due to fans and propellers). ML model(s) **135** can generate distance (e.g. in kilometres (km) ), velocity (e.g. in meters/second), and energy (e.g. in decibels relative to a milliwatt (dBm)) for one or more targets and/or target components.

ML models(s) **135** can be e.g. pretrained before deployment of the detection system (processing circuitry).

Signal processing unit **145** can perform conventional (e.g. non-machine-learning based) target detection methods. CFAR unit **140** can perform constant false alarm rate detection.

It is noted that the teachings of the presently disclosed subject matter are not bound by the system described with reference to **Fig. 1** and other figures herein. Equivalent and/or modified functionality can be consolidated or divided in another manner and can be implemented in any appropriate combination of software with firmware and/or hardware and executed on a suitable device. Detection system (processing circuitry) **100** can be a standalone entity, or integrated, fully or partly, with other entities.

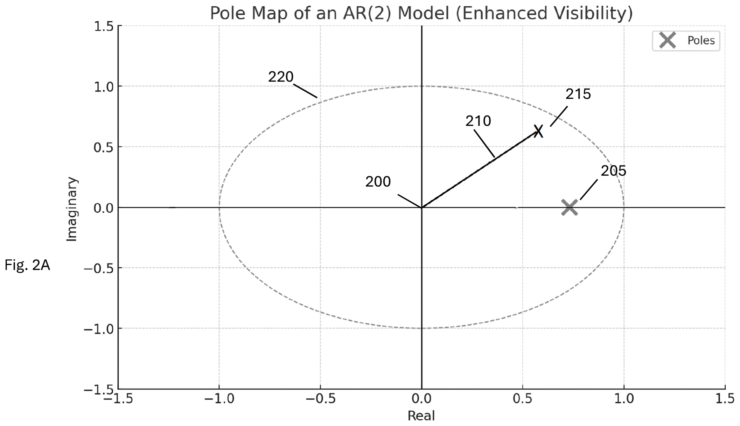

Figs. 2A-2B illustrate example polar maps of autoregressive estimations of radar data, in accordance with some embodiments of the presently disclosed subject matter.

Fig. 2A is an example polar map based on an AR(2) model.

The real and imaginary axes are marked, as is unit circle **220**. Each of the two poles **205 215** shown in **Fig. 2A** represents a radar target.

The first pole **205** represents a stationary element. The angle **210** from the origin **200** to the second pole **215** represents the velocity of a particular target. The distance from the origin represents the target energy.

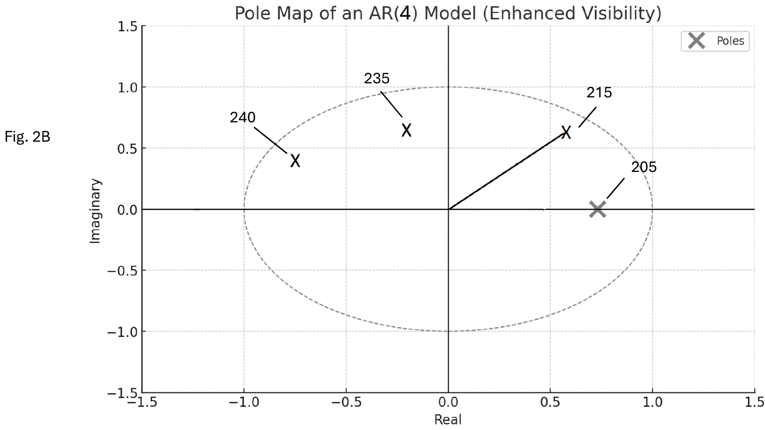

Fig. 2B is an example polar map based on an AR(4) model.

In this example, the three non-stationary poles **215 235 240** can represent three different speeds (e.g.one target and 2 propellers or jets). It is noted that if - for a particular range gate - multiple velocities are detected, it can be likely that this is due to presence of a single target with components of multiple velocities. It is accordingly noted that utilizing polar-map based machine learning detection can have better ability to identify jets, propellers etc. as well as birds etc., and thus can avoid false target detections

A pole with low energy can indicate noise.

Fig. 3 is a flow diagram of an example method of determining radar target characteristics based on machine learning in conjunction with autoregressive spectral estimation, in accordance with some embodiments of the presently disclosed subject matter.

Detection system (processing circuitry) **100** (e.g. autoregressive estimation unit **115**) can receive **305** radar pulse return data (e.g. I/Q data) from e.g. radar unit **150.**

Detection system (processing circuitry) **100** (e.g. autoregressive estimation unit **115**) can generate **310** an autoregressive spectral estimation, of a given order (e.g. 4), from the radar data.

By way of non-limiting example, detection system (processing circuitry) **100** (e.g. autoregressive estimation unit **115**) can estimate an AR model of a given order (e.g. AR(4)) by determining complex-domain AR coefficients $a_k$ such that:

$$x(t) = - (t) = \sum_{k=1}^{p} a_k x (t-k) + e(t)$$

where:

x(t) is the signal at time t

p is the order of the estimation (e.g. 4) and

e(t) is white noise.

Detection system (processing circuitry) **100** (e.g. autoregressive estimation unit **115**) can estimate the AR model in various ways e.g. least squares estimation, Yule-Walker equation computation, Levinson-Durbin algorithm, Burg's method, maximum likelihood estimation, parametric estimation with Kalman filtering, predictive error minimization, or other suitable methods.

Detection system (processing circuitry) **100** (e.g. autoregressive estimation unit **115**) can next determine **315** pole coordinates from the two or more complex coefficients of the AR model.

For example: detection system (processing circuitry) **100** (e.g. autoregressive estimation unit **115**) can calculate the poles by determining solutions of the characteristic equation:

$$1 - \sum_{k=1}^{p} a^k z^k = 0$$

Detection system (processing circuitry) **100** (e.g. autoregressive estimation unit 115) can then utilize the determined pole coordinates in conjunction with one or more trained machine learning models, to generate target(s) detection data (e.g. depth, energy, velocity).

ML model(s) **135** can one or more machine learning models that have been trained to determine characteristics of targets from AR modeling data.

For example: ML model(s) **135** can be a classification model which receives vector data indicative of poles of an AR(4) estimation, and generates an indication of whether or how many targets are present, as well as distance (e.g. in kilometers (km) ), velocity (e.g. in meters/second), and energy (e.g. in decibels relative to a milliwatt (dBm)) for one or more targets.

In some embodiments, detection system (processing circuitry) **100** (e.g. autoregressive estimation unit **115**) provides the poles data to the ML model(s) **135** as vectors e.g. each pole can be represented as a pair [x, y] where x is the real component and y is the complex component. In some embodiments, detection system (processing circuitry) **100** (e.g. autoregressive estimation unit **115**) provides the poles data to the ML model(s) **135** as graphical representations (e.g. similar to those depicted in **Figs. 2A-2B**.) In some embodiments, detection system (processing circuitry) **100** (e.g. autoregressive estimation unit **115**) provides the poles data to the ML model(s) **135** in another suitable representation.

It is noted that in some embodiments, detection system (processing circuitry) **100** (e.g. autoregressive estimation unit **115**) can provide other data that is derivative of the AR estimation to the ML model(s) **135,** and not specifically the poles. In this case, suitably trained models of ML model(s) **135** utilize (e.g. classify) the data derivative of the AR estimation (e.g. the calculated complex coefficients or data derivative the calculated complex coefficients), to generate an indication of whether or how many targets are present, as well as distance (e.g. in kilometers (km) ), velocity (e.g. in meters/second), and energy (e.g. in decibels relative to a milliwatt (dBm)) for one or more targets.

Detection system (processing circuitry) **100** (e.g. autoregressive estimation unit **115**) can optionally utilize the pole coordinates (or polar maps derivative of the pole coordinates) in conjunction with one or more trained machine learning models, to generate target identification data (e.g. jet, helicopter, bird). By way of non-limiting example: one or more distinct machine learning models of ML model(s) **135** can be trained to determine identification of targets from the AR modeling data.

It is noted that the teachings of the presently disclosed subject matter are not bound by the flow diagrams illustrated in **Figs. 3-5,** and that in some cases the illustrated operations may occur concurrently or out of the illustrated order. It is also noted that whilst the flow chart is described with reference to elements of the system of **Fig. 1,** this is by no means binding, and the operations can be performed by elements other than those described herein.

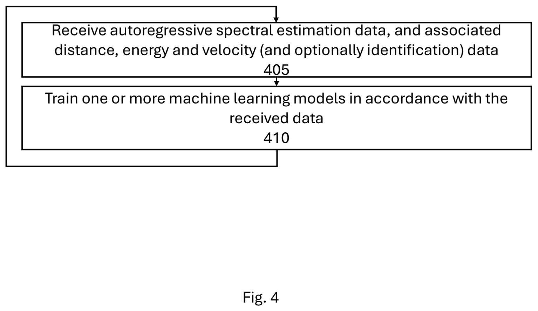

**Fig. 4** is a flow diagram of an example method of training a machine learning model to classify autoregressive spectral estimation data to radar target characteristics based on, in accordance with some embodiments of the presently disclosed subject matter.

The method illustrated in **Fig. 4** can be performed, for example, by a training system (not depicted) comprising a processor and memory. The trained machine learning models can be - for example - installed on detection system (processing circuitry) **100.**

The training system can receive **405** autoregressive spectral estimation data derived from radar data (for example: vector data indicating poles of on AR(4) estimation), and associated ground truth data such as: whether a target is present, and distance, energy and velocity of the target. Optionally: target identification data (e.g. airplane, projectile, helicopter etc.) can be included in the ground truth data.

The training system can train **410** one or more machine learning models in accordance with the received data and received ground truth.

The training system can repeat the sequence for additional training data.

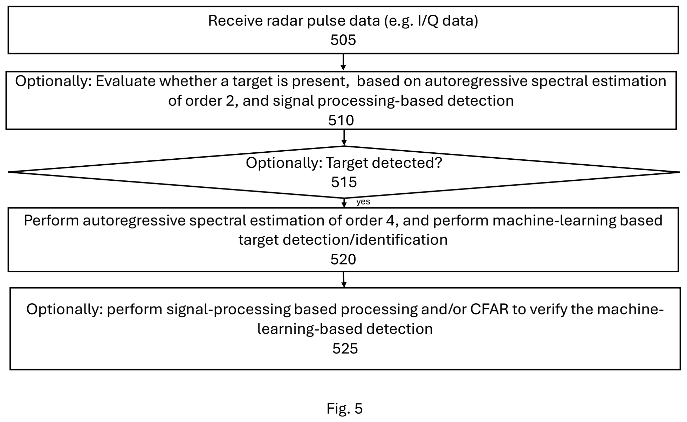

**Fig. 5** is a flow diagram of an example method of determining radar target characteristics based on multiple methods, including autoregressive spectral estimation, in accordance with some embodiments of the presently disclosed subject matter.

In some examples, detection system (processing circuitry) **100** can initially perform target detection using a non-machine learning-based method. For example, detection system (processing circuitry) **100** can create a range-doppler (RD) map, and perform CFAR detection in conjunction with the RD map, as known in the art. In some such examples, if the detection fails or the result is ambiguous, detection system (processing circuitry) **100** can then proceed to utilize a method based on **Fig. 3** or **Fig. 5.**

Detection system (processing circuitry) **100** (e.g. autoregressive estimation unit **115**) can receive **505** radar pulse return data (e.g. I/Q data) from e.g. radar unit **150.**

Detection system (processing circuitry) **100** (e.g. autoregressive estimation unit **115**) can optionally evaluate **510** presence of a target, based on utilizing signal processing techniques in conjunction with an AR spectral estimation of order 2 (i.e. where the estimation is based on data derivative of the series of radar pulses).

If the evaluation is successful i.e. a target was detected **515,** detection system (processing circuitry) **100** (e.g. autoregressive estimation unit **115**) can perform **520** machine-learning-based detection of a target and its depth, velocity, and energy (and optionally determine identification data), as described above with reference to **Fig. 3.**

Detection system (processing circuitry) **100** (e.g. autoregressive estimation unit **115**) can next (optionally) verify the results of the machine-learning-based detection/identification by utilizing, for example, one or more of:

- Signal processing techniques in conjunction with an AR spectral estimation of order 2 (i.e. where the estimation is based on data derivative of the series of radar pulses).

  For example: if machine-learning detection indicates a target with velocity of 2 kilometers/second together with a jet of velocity 5 kilometers/second, detection system (processing circuitry) **100** (e.g. autoregressive estimation unit **115**) can confirm that the AR(2) spectral estimation shows a velocity of 5 kilometers/second +/- a certain potential variation

- Applying CFAR to a range-doppler map that is based on data derivative of the series of radar pulses.

The verification can ensure that range, energy, and/or velocity as indicated by the machine-learning based identification are consistent with the other detection methods. The verification can also ensure that the target identification data (i.e. airplane, helicopter etc.) as indicated by the machine-learning based identification is consistent with the other detection methods.

It is to be understood that the invention is not limited in its application to the details set forth in the description contained herein or illustrated in the drawings. The invention is capable of other embodiments and of being practiced and carried out in various ways. Hence, it is to be understood that the phraseology and terminology employed herein are for the purpose of description and should not be regarded as limiting. As such, those skilled in the art will appreciate that the conception upon which this disclosure is based may readily be utilized as a basis for designing other structures, methods, and systems for carrying out the several purposes of the presently disclosed subject matter.

It will also be understood that the system according to the invention may be, at least partly, implemented on a suitably programmed computer. Likewise, the invention contemplates a computer program being readable by a computer for executing the method of the invention. The invention further contemplates a non-transitory computer-readable memory tangibly embodying a program of instructions executable by the computer for executing the method of the invention.

Those skilled in the art will readily appreciate that various modifications and changes can be applied to the embodiments of the invention as hereinbefore described without departing from its scope, defined in and by the appended claims.

**Claims**

1. A processing circuitry-based method of detecting radar targets, the method comprising:

   a) receiving data derivative of a series of radar pulse measurements;
   b) generating an autoregressive (AR) spectral estimation, of a given order, from the received data, thereby resulting in two or more complex coefficients of an estimated AR model;
   c) utilizing data derivative of the two or more complex coefficients as input to one or more trained machine learning models, thereby resulting in, at least:

      a. an indication of presence or absence of a target, and
      b. responsive to presence of the target:

a distance, an energy, and a velocity of the target,

the one or more models having been trained to receive data derivative of complex coefficients and output data informative of target depth, energy, and velocity.

2. The method of claim 1, wherein the utilizing the data as input to the trained machine learning models further results in, responsive to presence of the target:
data indicative of a target identification.

3. The method of any one of claims 1-2, wherein the data derivative of the series of radar pulse measurements comprises in-phase and quadrature (I/Q) data.

4. The method of any one of claims 1-3, wherein the given order is four.

5. The method of any of claims 1-4, wherein the data derivative of the complex coefficients is data informative of pole coordinates.

6. The method of claim 5, wherein the pole coordinates are based on roots of:

$$1 - \sum_{k=1}^{p} a^k z^k$$

where p is the given order of the estimated model, $a^k$ are the complex coefficients of the estimated model, and $z^k$ are the radar pulse measurements.

7. The method of claim 5, wherein the data derivative of the complex coefficients is polar map image data based on pole coordinates, the pole coordinates being based on the complex coefficients of the estimated model.

8. The method of any one of claims 1-7, wherein the performing complex autoregressive spectral estimation comprises at least one of:

a) least squares estimation,
b) Yule-Walker equation computation,
c) Levinson-Durbin algorithm,
d) Burg's method,
e) maximum likelihood estimation,
f) parametric estimation with Kalman filtering, and
g) predictive error minimization.

9. The method of claim 4, the method additionally comprising, prior to step b):

evaluating presence of a target, based on applying signal processing techniques to an AR spectral estimation of order two of data derivative of the series of radar pulses;
and wherein the generating is responsive to successful evaluating of the presence of the target.

10. The method of claim 9, the method additionally comprising, subsequent to c):
verifying the distance, energy, and velocity of the target, based on at least one of:

i. utilizing a constant false alarm rate (CFAR) method in conjunction with a range-Doppler map based on data derivative of the series of radar pulses; and
ii. applying signal processing techniques to an AR spectral estimation of order two of data derivative of the series of radar pulses.

11. The method of any one of claims 1-10, wherein at least one of the one or more machine learning models was trained by a method comprising:

a. receiving data that is derivative of AR spectral estimation coefficients associated with a given radar target;
b. receiving ground truth data associated with the given radar target, the ground truth data comprising at least one of:

i. a distance,
ii. an energy,
iii. a velocity, and
iv. an identification
associated with the given radar target;

c. training the machine learning model based on the received data derivative of the AR spectral estimation coefficients and the received ground truth data.

12. A system of detecting radar targets, the system comprising a processing circuitry configured to:

a) receive data derivative of a series of radar pulse measurements;
b) generate an autoregressive (AR) spectral estimation, of a given order, from the received data, thereby resulting in two or more complex coefficients of an estimated AR model;
c) utilize data derivative of the two or more complex coefficients as input to one or more trained machine learning models, thereby resulting in, at least:

a. an indication of presence or absence of a target, and
b. responsive to presence of the target:
a distance, an energy, and a velocity of the target,

the one or more models having been trained to receive data derivative of complex coefficients and output data informative of target depth, energy, and velocity.

13. A computer program product comprising a computer readable non-transitory storage medium containing program instructions, which program instructions when read by a processor, cause the processing circuitry to perform a method of detecting radar targets, the method comprising:

a) receiving data derivative of a series of radar pulse measurements;
b) generating an autoregressive (AR) spectral estimation, of a given order, from the received data, thereby resulting in two or more complex coefficients of an estimated AR model;
c) utilizing data derivative of the two or more complex coefficients as input to one or more trained machine learning models, thereby resulting in, at least:

a. an indication of presence or absence of a target, and
b. responsive to presence of the target:
a distance, an energy, and a velocity of the target,

the one or more models having been trained to receive data derivative of complex coefficients and output data informative of target depth, energy, and velocity.

Fig. 1

Pole Map of an AR(2) Model (Enhanced Visibility)

Fig. 2A

Fig. 2B

Pole Map of an AR(4) Model (Enhanced Visibility)

| Receive radar pulse data (e.g. I/Q data)<br>305 |
|---|

| Perform a complex autoregressive spectral estimation, of a given order, from the radar data,<br>resulting in an AR model based on complex coefficients<br>310 |
|---|

| Determine pole coordinates from the 2 or more complex coefficients of the model<br>315 |
|---|

| Utilize the pole coordinates (or polar maps derivative of the pole coordinates) in conjunction<br>with one or more trained machine learning models, to generate target(s) detection data (e.g.<br>depth, energy, velocity). Optionally generate identification data<br>320 |
|---|

Fig. 3

```
┌─────────────────────────────────────────────────────────┐
│                                                          │
│   ┌──────────────────────────────────────────────────┐   │
│   │ Receive autoregressive spectral estimation data,  │   │
│   │ and associated distance, energy and velocity (and │   │
│   │ optionally identification) data                   │   │
│   │                        405                        │   │
│   ├──────────────────────────────────────────────────┤   │
│   │ Train one or more machine learning models in      │   │
│   │ accordance with the received data                 │   │
│   │                        410                        │   │
│   └──────────────────────────────────────────────────┘   │
│                                                          │
└─────────────────────────────────────────────────────────┘
```

Fig. 4

```
┌──────────────────────────────────────────────────────────────────────────┐
│                    Receive radar pulse data (e.g. I/Q data)                │
│                                   505                                      │
└──────────────────────────────────────────────────────────────────────────┘
                                      │
                                      ▼
┌──────────────────────────────────────────────────────────────────────────┐
│ Optionally: Evaluate whether a target is present,  based on autoregressive │
│      spectral estimation of order 2, and signal processing-based detection │
│                                   510                                      │
└──────────────────────────────────────────────────────────────────────────┘
                                      │
                                      ▼
                   Optionally: Target detected?
                                515
                                      │ yes
                                      ▼
┌──────────────────────────────────────────────────────────────────────────┐
│ Perform autoregressive spectral estimation of order 4, and perform         │
│           machine-learning based target detection/identification           │
│                                   520                                      │
└──────────────────────────────────────────────────────────────────────────┘
                                      │
                                      ▼
┌──────────────────────────────────────────────────────────────────────────┐
│ Optionally: perform signal-processing based processing and/or CFAR to      │
│              verify the machine-learning-based detection                    │
│                                   525                                      │
└──────────────────────────────────────────────────────────────────────────┘
```

Fig. 5

| | Europäisches Patentamt |
|---|---|
| | European Patent Office |
| | Office européen des brevets |

## EUROPEAN SEARCH REPORT

**Application Number**

EP 25 21 2789

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FAN YIFEI ET AL: "Multifractal Correlation Analysis of Autoregressive Spectrum-Based Feature Learning for Target Detection Within Sea Clutter", IEEE TRANSACTIONS ON GEOSCIENCE AND REMOTE SENSING, IEEE, USA, vol. 60, 22 December 2021 (2021-12-22), pages 1-11, XP011901954, ISSN: 0196-2892, DOI: 10.1109/TGRS.2021.3137466 [retrieved on 2022-03-03] | 1-4,8, 11-13 | INV. G01S7/288 G01S7/41 G01S13/04 G01S13/10 G01S13/522 G01S13/524 G01S13/56 G01S13/933 |
| A | * Sections I - III; figure 2 * | 5-7,9,10 | |
| X | CARRERA ENRIQUE V ET AL: "Target Detection using Radar Processors based on Machine Learning", 2020 IEEE ANDESCON, IEEE, 13 October 2020 (2020-10-13), pages 1-5, XP033868895, DOI: 10.1109/ANDESCON50619.2020.9272173 [retrieved on 2020-11-25] | 1-3,8, 12,13 | |
| | | | **TECHNICAL FIELDS SEARCHED (IPC)** |
| A | * Sections II - IV; figure 3 * | 4-7,9-11 | G01S |
| A | BOUVIER C ET AL: "Radar clutter classification using autoregressive modelling, K-distribution and neural network", 1995 INTERNATIONAL CONFERENCE ON ACOUSTICS, SPEECH, AND SIGNAL PROCESSING; 9-12 MAY ,1995 ; DETROIT, MI, USA, IEEE, NEW YORK, NY, USA, vol. 3, 9 May 1995 (1995-05-09), pages 1820-1823, XP010151645, DOI: 10.1109/ICASSP.1995.480091 ISBN: 978-0-7803-2431-2 * the whole document * | 1-13 | |

-/--

The present search report has been drawn up for all claims

| Place of search | Date of completion of the search | Examiner |
|---|---|---|
| Munich | 24 February 2026 | Reeck, Guido |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

**Application Number**

EP 25 21 2789

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BUJAKOVIC DIMITRIJE M ET AL: "Expert system based on hidden Markov models for recognition of radar targets", 2016 24TH TELECOMMUNICATIONS FORUM (TELFOR), IEEE, 22 November 2016 (2016-11-22), pages 1-8, XP033044988, DOI: 10.1109/TELFOR.2016.7818819 [retrieved on 2017-01-13] * Abstract; Section VI * ----- | 1-13 | |
| A | CN 102 184 408 B (UNIV XIDIAN) 26 December 2012 (2012-12-26) * figure 1 * ----- | 1-13 | |
| A | TIAN YUGUANG ET AL: "Fast prediction method for dynamic RCS of rotary wing small UAVs", 20240318, vol. 13104, 18 March 2024 (2024-03-18), pages 131041Q-131041Q, XP060199371, ISSN: 0277-786X, DOI: 10.1117/12.3022661 ISBN: 978-1-5106-7766-1 * Abstract; Sections 1 & 2 * ----- | 1-13 | TECHNICAL FIELDS SEARCHED (IPC) |

The present search report has been drawn up for all claims

| Place of search | Date of completion of the search | Examiner |
|---|---|---|
| Munich | 24 February 2026 | Reeck, Guido |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 25 21 2789

This annex lists the patent family members relating to the patent documents cited in the above-mentioned European search report.
The members are as contained in the European Patent Office EDP file on
The European Patent Office is in no way liable for these particulars which are merely given for the purpose of information.

24-02-2026

| Patent document cited in search report | Publication date | Patent family member(s) | Publication date |
|---|---|---|---|
| CN 102184408 B | 26-12-2012 | NONE | |

EPO FORM P0459

For more details about this annex : see Official Journal of the European Patent Office, No. 12/82